(19)

(11) **EP 3 937 836 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **20718130.6**

(22) Anmeldetag: **11.03.2020**

(51) Internationale Patentklassifikation (IPC):
***A61C 8/00*** (2006.01)

(52) Gemeinsame Patentklassifikation (CPC):
**A61C 8/005; A61C 8/006; A61C 8/0068; A61C 8/0069**

(86) Internationale Anmeldenummer:
**PCT/DE2020/000049**

(87) Internationale Veröffentlichungsnummer:
**WO 2020/182243 (17.09.2020 Gazette 2020/38)**

(54) **MONTAGESCHNITTSTELLE ZWISCHEN EINER SUPRAKONSTRUKTION UND EINEM IMPLANTATKÖRPER**

ASSEMBLY INTERFACE BETWEEN A SUPERSTRUCTURE AND AN IMPLANT BODY

INTERFACE D'ASSEMBLAGE ENTRE UNE SUPERCONSTRUCTION ET UN CORPS D'IMPLANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2019 DE 102019001715**

(43) Veröffentlichungstag der Anmeldung:
**19.01.2022 Patentblatt 2022/03**

(73) Patentinhaber: **Spindler, Bruno**
**77728 Oppenau (DE)**

(72) Erfinder:
- **KIMMIG, Clemens**
  **77728 Oppenau (DE)**
- **WÖLFLE, Bennjamin**
  **77886 Lauf (DE)**
- **REUTER, Timo**
  **76646 Bruchsal (DE)**
- **SPINDLER, Bruno**
  **77728 Oppenau (DE)**

(74) Vertreter: **Thämer, Wolfgang**
**Zürn & Thämer**
**Patentanwälte**
**Adalbert-Stifter-Straße 12**
**76275 Ettlingen (DE)**

(56) Entgegenhaltungen:
**EP-A1- 1 972 297**
**WO-A1-98/52488**
**DE-U1- 202008 016 697**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 937 836 B1

Processed by Luminess, 75001 PARIS (FR)

## Beschreibung

Die Erfindung betrifft eine Montageschnittstelle zwischen einem eine Suprakonstruktion tragenden - eine durchgehende, geknickte Ausnehmung aufweisenden - Suprastrukturträger und einem ein Innengewinde aufweisenden Implantatkörper unter Zuhilfenahme eines Schraubbolzens, wobei der Suprastrukturträger und der Implantatkörper eine zumindest bereichsweise komplementäre Kupplungsgeometrie zur Sicherung der Verdrehsicherheit der Montageschnittstelle aufweisen. Dabei ist die Ausnehmung des Suprastrukturträgers zur Suprakonstruktion und zum Implantatkörper hin offen.

Aus der WO 98/52 488 A1 ist ein Dentalimplantat bekannt, bei dem ein Suprastrukturträger mit einer Schraubverbindung verdrehfest an einem Implantatkörper befestigt wird. In einer Zusammenbauzeichnung mit einem Strukturträger mit gerader Durchgangsbohrung wird die Schraubverbindung mit einem Gewindebolzen realisiert.

In der zahnärztlichen Implantologie wird u.a. im Rahmen der Herstellung eines prothetischen Einzelzahnersatzes häufig ein enossaler Implantatkörper verwendet, der die Prothese trägt. In diesem Fall wird der Implantatkörper, eine Art Schraubdübel, in einer künstlich im Patientenkiefer erzeugten Bohrung eingeschraubt. Der eingeschraubte Implantatkörper nimmt bei der fertigen Prothese einen Implantatpfosten auf. Letzterer wird verdrehsicher im Implantatkörper mit einem speziellen Spannmittel befestigt. Auf den Implantatpfosten wird direkt oder indirekt eine, die sichtbare Zahnkrone bildende Suprastruktur, z.B. durch Verkleben, aufgesetzt.

Aus der DE 20 2012 102 746 U1 ist ein Zahnimplantataufbausystem bekannt, bei dem ein Implantatkörper, ein Suprastrukturträger, ein Klebekörper und eine künstliche Krone einen künstlichen Zahnersatz bilden.

Der vorliegenden Erfindung liegt die Problemstellung zugrunde, eine Montageschnittstelle zwischen einem Suprastrukturträger und einem Implantatkörper so zu verbessern, dass bei einfacher Vor- und Endmontage ein sicheres Tragen der Suprastruktur gewährleistet ist.

Diese Problemstellung wird mit den Merkmalen des Patentanspruchs 1 gelöst. Dabei ist in der Ausnehmung des Suprastrukturträgers in ihrem dem Implantatkörper zugewandten Bereich ein Antriebsinnengewinde angeordnet. Der Schraubbolzen weist zwei mit oder ohne Abstand hintereinander angeordnete Außengewinde auf, von denen das erste ein Antriebsaußengewinde und das zweite ein Spannaußengewinde ist. Beide Außengewinde haben unterschiedliche Steigungen. Das Antriebsaußengewinde passt in das Antriebsinnengewinde der Ausnehmung des Suprastrukturträgers, während das Spannaußengewinde in das Spanninnengewinde des Implantatkörpers passen. Der Schraubbolzen weist zwischen dem Spannaußengewinde und dem Antriebsaußengewinde einen Zwischenbereich auf. Entweder setzt sich dieser aus einem Zylinderzapfen und einem an einen planen Anschlagbund anlegbaren Anschlagflansch zusammen, wobei der Anschlagbund einen Übergang zwischen dem Antriebsinnengewinde und einer zylindrischen Bohrung der Ausnehmung bildet oder der Zwischenbereich ist anschlagbundfrei ausgebildet, wobei sich an das Antriebsinnengewinde eine zylindrische Hintergriffsbohrung anschließt, die in eine Anschlagzone in Form einer sich in Richtung der Hintergriffsbohrung aufweitende Engstelle übergeht, sodass der Schraubbolzen vor dem Befestigen des Suprastrukturträgers am Implantatkörper so weit vom Antriebsinnengewinde aus in den Suprastrukturträger hineinschraubbar ist, dass sein Antriebsaußengewinde das Antriebsinnengewinde wieder verlässt, um in die Hintergriffsbohrung zu gelangen und wobei ein gewindeloser Zylinderzapfen des Schraubbolzens mit geringem Spiel durch die Engstelle hindurchpasst.

Mit der Erfindung wird eine Montageschnittstelle geschaffen, die einen Suprastrukturträger mithilfe eines Doppelschraubgetriebes mit einem Implantatkörper verbindet. Dazu haben sowohl der Suprastrukturträger als auch der Implantatkörper jeweils ein eigenes Innengewinde. Beide Innengewinde kämmen mit zwei verschiedenen Außengewinden eines Schraubbolzens.

In einem Vormontageschritt wird der Schraubbolzen in das im unteren Ende des Suprastrukturträgers eingearbeitete Innengewinde durch Hineinschrauben oder Hindurchschrauben verliersicher angeordnet. Zur Verbindung mit dem Implantatkörper wird der Suprastrukturträger zusammen mit dem Schraubbolzen in den Implantatkörper eingesetzt. Dabei gelangt das freie Ende des Schraubbolzens vor das Innengewinde des Implantatkörpers. Mithilfe eines Werkzeugs, das durch eine Ausnehmung des Strukturträgers hindurch in eine Werkzeugausnehmung des Schraubbolzenseingekoppelt wird, wird der Schraubbolzen in eine Rotationsbewegung versetzt, sodass sich zum einen das vordere Schraubbolzengewinde in das Implantatkörpergewinde einschraubt und sich zum anderen der Suprastrukturträger und der Implantatkörper translatorisch aufeinander zu bewegen. Mit dem Schraubbolzen werden somit der Suprastrukturträger und der Implantatkörper gegeneinander dauerhaft verspannt.

Die Gewinde, die die drei an der Montageschnittstelle beteiligten Teile miteinander verbinden, sind ein- und/oder mehrgängig ausgeführt. Zum ein- oder losschraubenden Rotieren des Schraubbolzens - in den oder aus dem Implantatkörper - weist dessen radiale Außenkontur keine Werkzeugangriffsfläche auf.

Diese Beschränkung betrifft keine radiale Kontur einer axialen Bohrung oder anders gestalteten axialen Ausnehmung.

Der Schraubbolzen, der im Gegensatz zu einer regulären Schraube keinen Schraubenkopf aufweist, muss nicht durch die Öffnung des Suprastrukturkörpers in die Ausnehmung der Suprastruktur eingebracht werden, die der Suprakonstruktion am nächstgelegenen ist. Folglich kann diese Ausnehmung entlang ihrer gesamten Länge einen Querschnitt haben, der kleiner ist als der Querschnitt eines regulären Schraubenkopfs. Somit erhöht das Verwenden dieser Montageschnittstelle ohne Änderung der Baugröße des Suprastrukturträgers dessen Formsteifigkeit.

Weitere Einzelheiten der Erfindung ergeben sich aus den Unteransprüchen und der nachfolgenden Beschreibung schematisch dargestellter Ausführungsformen.

Figur 1: Explosionsmodell eines prothetischen Zahnersatzes;

Figur 2: Längsschnitt durch einen prothetischen Zahnersatz ohne Zahnkrone;

Figur 3: Perspektivische Darstellung des Schraubbolzens;

Figur 4: Längsschnitt durch den Suprastrukturträger beim Einstecken des Schraubbolzens;

Figur 5: wie Figur 4, jedoch nach dem Einschrauben des Schraubbolzens;

Figur 6: Seitenansicht eines kurzen Schraubbolzens;

Figur 7: Längsschnitt durch Suprastrukturträger und Implantatkörper bei lose einstecktem Schraubbolzen;

Figur 8: wie Figur 7, jedoch nach dem Befestigen des Suprastrukturträgers;

Figur 9: Perspektivische Darstellung eines Schraubbolzens mit gegenläufigen Außengewinden;

Figur 10: Längsschnitt durch den Suprastrukturträger mit eingeschraubtem Schraubbolzen beim Einsetzen in den Implantatkörper (nicht Teil der Erfindung);

Figur 11: wie Figur 10, jedoch nach dem Befestigen des SupraStrukturträgers (nicht Teil der Erfindung);

Figur 12: vereinfachte Darstellung des Doppelschraubgetriebes mit zwei Rechtsgewinden in halbseitiger Schnittdarstellung vor dem Eindrehen des Ersatzschraubbolzens;

Figur 13: wie Figur 12, jedoch ist der Ersatzschraubbolzen um eine Umdrehung eingeschraubt worden;

Figur 14: wie Figur 13, jedoch ist der Ersatzschraubbolzen um eine weitere Umdrehung eingeschraubt worden;

Figur 15: wie Figur 14, jedoch ist der Ersatzschraubbolzen um eine letzte Umdrehung eingeschraubt worden;

Figur 16: vereinfachte Darstellung des Doppelschraubgetriebes mit einem Links- und einem Rechtsgewinde in halbseitiger Teilschnittdarstellung vor dem Eindrehen des Ersatzschraubbolzens;

Figur 17: wie Figur 16, jedoch ist der Ersatzschraubbolzen um eine Umdrehung eingeschraubt worden;

Figur 18: wie Figur 17, jedoch ist der Ersatzschraubbolzen um eine weitere Umdrehung eingeschraubt worden;

Figur 19: wie Figur 18, jedoch ist der Ersatzschraubbolzen um eine letzte Umdrehung eingeschraubt worden.

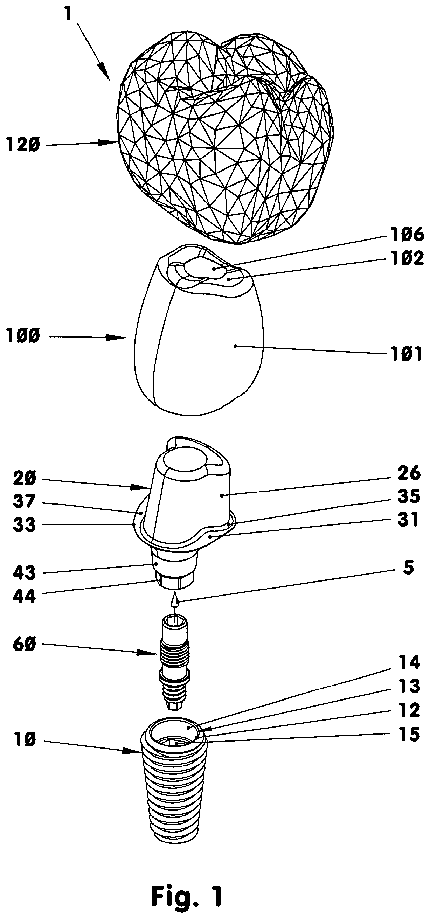

Die Figur 1 zeigt beispielhaft alle Teile eines künstlichen Zahnes (1) in Form einer Explosionszeichnung. Als Basis dient ein hohlschraubenartiger Implantatkörper (10). Mit ihm wird ein Suprastrukturträger (20), in Kombination mit einem z.B. aufgeklebten Klebekörper (100), mittels eines speziellen Schraubbolzens (60) verdrehsicher positioniert und verschraubt.

Dazu sitzt der z.B. abgewinkelte Suprastrukturträger (20) im Implantatkörper (10) in einem Konussitz (14). Der Suprastrukturträger (20) wird mit Hilfe des Schraubbolzens (60) in einer Ausnehmung (13) des Implantatkörpers (10) gehalten. Auf den Klebekörper (100) wird als weiteres Suprastrukturteil in der Regel eine künstliche Zahnkrone (120) aufgesetzt und verklebt.

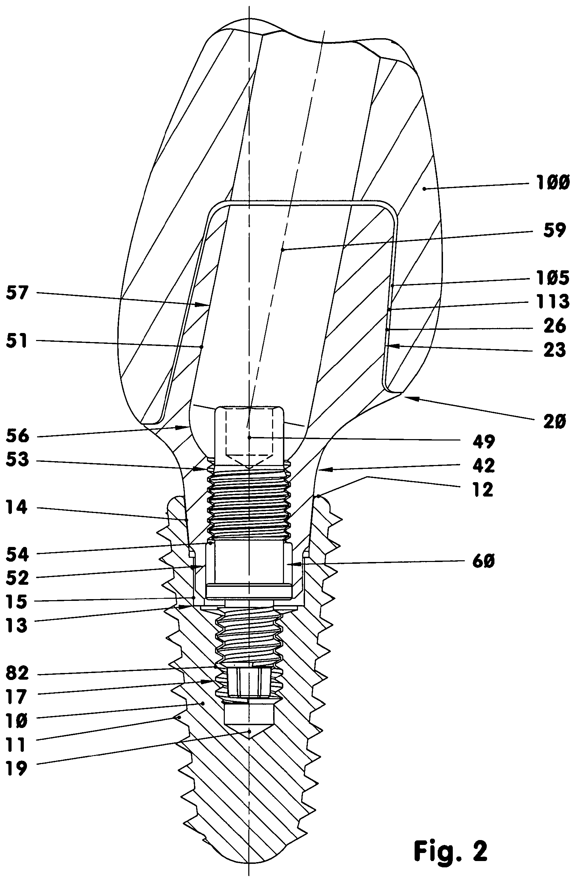

Die Basis des prothetischen Zahnersatzes (1) ist ein in den Kieferknochen einschraubbarer Implantatkörper (10). Er ist eine Hohlschraube mit einem ggf. selbstschneidenden, z.B. nichtmetrischen Außengewinde. Circa in der oberen Hälfte weist der Implantatkörper (10) die mehrstufige Ausnehmung (13) auf, die in drei Zonen aufgeteilt ist, vgl. Figur 2. Die erste Zone (14), sie liegt im Bereich der Implantatschulter (12) des Implantatkörpers (10), ist ein Innenkonus, der einen Kegelwinkel von z.B. 18 Winkelgraden aufweist. Der Innenkonus (14) geht in einen als Verdrehsicherung dienenden Innensechskant (15) der zweiten Zone über. Anstelle des Innensechskants (15), kann als Kupplungsgeometrie z.B. auch ein Doppelinnensechskant oder eine andere form- oder kraftschlüssige Verdrehsicherungsgeometrie verwendet werden. Die dritte Zone (17) ist eine Gewindebohrung mit einem Spanninnengewinde (82), das bei der Montage den den Suprastrukturträger (20) haltenden Schraubbolzen (60) aufnimmt. Das rechtssteigende Spanninnengewinde (82) ist beispielsweise ein M 1,6 $\times$ 0,35-Gewinde nach DIN 13, Blatt 1.

Der Suprastrukturträger (20) hat primär die Aufgabe - im Implantatkörper (10) sitzend - als Basis für die künstliche Zahnkrone (120) zu dienen. Er hat einen Bereich, der dem Implantatkörper (10) und einen Bereich, der der Zahnkrone (120) bzw. der Suprastruktur zugewandt ist.

Der dem Implantatkörper (10) zugewandte Bereich ist der Implantathals (42) mit seinem Außenkonus (43) und seinem Außensechskant (44). Der Außenkonus (43) und der Außensechskant (44) sitzen passgenau in der Ausnehmung (13) des Implantatkörpers (10). In der zur Spitze des Implantatkörpers (10) weisenden axialen Richtung kontaktieren die Stirnflächen des Außensechskants (44) die Ausnehmung (13) nicht.

Oberhalb des Implantathalses (42) schließt sich ein Implantatteller (31) an, der z.B. mit einem stetigen Übergang aus dem Implantathals (42) hervorgeht. Der z.B. unrunde Implantatteller (31) hat zumindest bereichs- oder abschnittsweise die Form des Mantels eines Kegelstumpfes, dessen Konuswinkel sich zur Zahnkrone (120) hin öffnet. Der Konuswinkel liegt z.B. zwischen 125 und 131 Winkelgraden. Ggf. besteht die Unterseite des Implantattellers (31) auch aus mehreren auseinander hervorgehenden Kegelkoni, wobei jeder gegenüber der Mittellinie (29) einen anderen Winkel einschließt. In diesem Fall liegen die Koniwinkel zwischen 120 und 136 Winkelgraden.

Der äußere Rand (33) des Implantattellers (31) hat hier einen Abstand zur Mittellinie (29), der sich bei einer 360°-Rotation um die Mittellinie (29) z.B. zwischen 2,22 und 3,48 mm bereichsweise stetig ändert. Der Rand (33) erfährt hierbei in Längsrichtung der Mittellinie (29) einen Höhenversatz von z.B. 0,8 ± 0,2 mm.

Oberhalb des Implantattellers (31) erstreckt sich der Implantatpfosten (23). Letzterer hat im z.B. ausgerundeten Übergangsbereich zum Implantatteller (31) einen Querschnitt, der kleiner ist als der maximale Querschnitt des Implantattellers (31). Somit hat auch der Implantatteller (31) zum Implantatpfosten (23) hin eine flächige Randoberseite (37). In nahezu jeder durch die Mittellinie (29) gelegten Schnittebene ist die Kontur der flächigen Randoberseite zumindest bereichsweise senkrecht zur Mittellinie (29) orientiert. An der schmalsten Stelle ragt der Implantatteller (31) z.B. 0,4 bis 0,5 mm in Radialrichtung über. Die breiteste Stelle kann mehr als z.B. 2 mm messen. Die flächige Randoberseite (37) bildet u.a. eine Aussitzfläche für den Klebekörper (100) oder die Zahnkrone (120).

Der ausgerundete Übergangsbereich kann auch in axialer Richtung, parallel zur Mittellinie (29), um 0,05 bis 0,2 mm vertieft werden, so dass zwischen der flächigen Randoberseite (37) und dem Implantatpfosten (23) eine Rinne (35) entsteht. Nach dem in Figur 2 dargestellten Schnitt verjüngt sich der Implantatpfosten (23) nach oben hin.

Nach Figur 1 besteht der Implantatpfosten (23) in erster Näherung aus einer Überlagerung eines schrägen Kegelstumpfs mit kreisrundem Grundquerschnitt und eines diesen bereichsweise durchdringenden schrägen Kegelstumpfs mit elliptischem Querschnitt. Die Mittellinien der beiden Kegelstümpfe bilden eine Ebene, in der die kleinen Halbachsen des elliptischen Querschnitts liegen. Im Bereich der Durchdringung der beiden schrägen Kegelstümpfe befinden sich Ausrundungen, deren Radien z.B. zwischen 0,3 und 0,4 mm liegen. Durch diese spezielle Form des Implantatpfostens (23) ergibt sich eine verdrehsichere Basis für den zu tragenden Klebekörper (100).

Ggf. ist der Suprastrukturträger (20) zumindest oberhalb des Implantattellers (31) mit einer Titannitridbeschichtung ausgestattet. Ihre Schichtdicke beträgt z.B. 1 bis 4 μm. Alternativ können dort auch dünnwandige Keramik- oder Copolymerbeschichtungen aufgetragen sein.

Nach Figur 1 hat der Suprastrukturträger (20) eine durchgehende Ausnehmung (51), die im mittleren Bereich eine Knickstelle mit einem Knickwinkel von z.B. 11 ± 4 Winkelgraden aufweist. Die fertig bearbeitete Ausnehmung (51) besteht aus vier Zonen.

Die erste (52) und die zweite Zone (53) dienen dem Einführen des Schraubbolzens (60). Die erste, untere Zone (52) ist eine zylindrische Bohrung, deren Durchmesser bei einer Tiefe von ca. 1,9 mm z.B. 2,1 mm beträgt. Ihre Mittellinie (49) deckt sich mit der Mittellinie (29). An sie schließt sich als zweite Zone (53) z.B. ein rechtsgängiges Innengewinde (72) an, das nach DIN 13, Blatt 2 mit M 2 × 0,25 bezeichnet wird. Dieses Feingewinde hat hier eine Länge von z.B. 2 mm. Den Übergang zwischen dem Innengewinde (72) und der Bohrung (52) bildet ein planer Anschlagbund (54).

Die vierte, obere Zone (57) ist ebenfalls eine zylindrische Bohrung. Ihre Mittellinie (59) schneidet die Mittellinie (29) in der dritten Zone (56), z.B. unter einem Winkel von 11 Winkelgraden. Die obere Zone (57) dient der Einführung des Werkzeuges, mit der der Schraubbolzen (60) angezogen wird. Die dritte Zone (56) stellt einen Übergangsbereich dar, der z.B. die Mantelfläche einer Halbkugel aufweist, vgl. Figur 2.

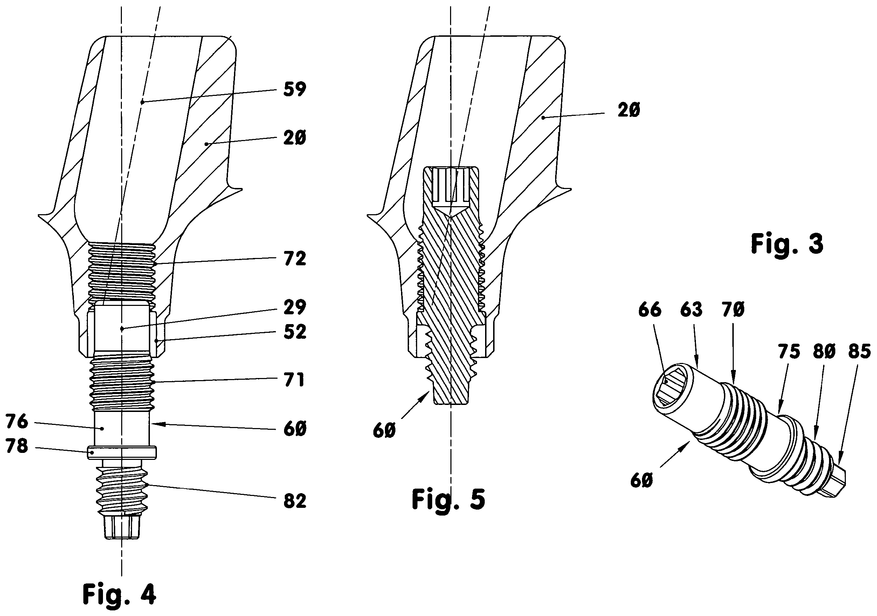

Der Schraubbolzen (60-62) ist in der Regel in fünf Bereiche aufgeteilt. Diese sind von vorn nach hinten aneinandergereiht ein Anlenkbereich (63), ein Antriebsbereich (70), ein Zwischenbereich (75), ein Spannbereich (80) und ein Greifbereich (85), vgl. Figuren 3, 6 und 9.

Der Anlenkbereich (63) ist ein zylinderförmiger Zapfen (64), in den eine Werkzeugausnehmung (65) eingearbeitet ist. Er hat eine Länge von z.B. 1,5 mm bei einem Durchmesser von z.B. 1,66 mm. Seine zentrale Werkzeugausnehmung (65) ist nach den Figuren 3, 6 und 9 ein Innensechskant (66) mit einer Schlüsselweite von z.B. 1,13 mm, dessen vom Werkzeug nutzbare Tiefe bei z.B. 1,05 mm liegt. Anstelle des Innensechskants kann auch ein Innensechsrund, ein Innenvielzahn, ein Kreuzschlitz, ein Schlitz oder dergleichen vorgesehen sein. Eine andere Antriebsvariante stellt ein Außensechsrund oder Außensechskant dar. Ggf. sind die Sechsrund- oder Sechskantformen in Axialrichtung tonnenförmig abgerundet.

Bei den Schraubbolzen (60-62) der Figuren 3, 6, und 9 kann die Werkzeugausnehmung (65) - unter einem Verkürzen oder Weglassen des Zapfens (64) - in den Antriebsbereich (70) eingearbeitet werden, wodurch sich der Schraubbolzen (60-62) um z.B. 1,5 mm oder mehr verkürzt.

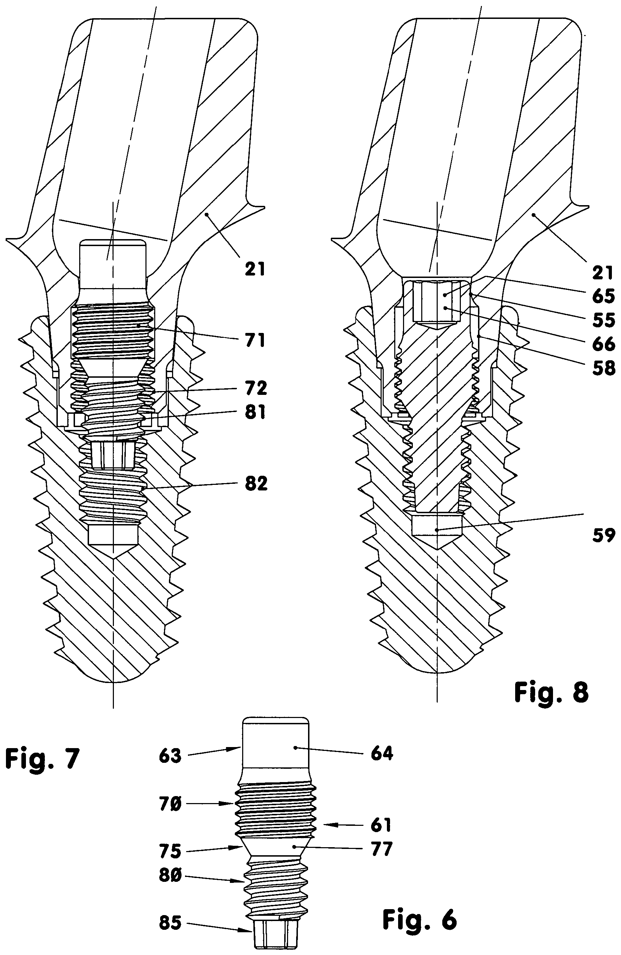

Der Antriebsbereich (70) weist nach Figuren 3 und 6 ein Feingewinde des Typs M 2 × 0,25 auf, dessen nutzbare Länge z.B. 1,73 mm beträgt. Andere Feingewinde als Antriebsgewinde (71, 72) wie z.B. M 1,8 × 0,25, M 1,8 × 0,2, M 1,6 × 0,25 oder M 1,6 × 0,2 sind ebenfalls denkbar. Bei diesen ist der Außendurchmesser des Antriebsbereiches (70) jeweils entsprechend anzupassen.

Der an den Antriebsbereich (70) anschließende Zwischenbereich (75) dient als Abstandshalter zum nachfolgenden Spannbereich (80). Der Zwischenbereich (75), nach Figur 2, setzt sich aus einem Zylinderzapfen (76) und einem Anschlagflansch (78) zusammen. Der Zylinderzapfen (76) hat z.B. den gleichen Außendurchmesser wie der Anlenkbereich (63). Ggf. entspricht der Außendurchmesser des Zylinderzapfens (76) dem Kerndurchmesser des Antriebsaußengewindes (71). Die Länge des Zwischenbereichs (75) beträgt z.B. 1,03 mm.

Zum Spannbereich (80) hin schließt sich an den Zylinderzapfen (76) ein scheibenförmiger Anschlagflansch (78) an. Der Anschlagflansch (78) hat eine Wandstärke von z.B. 0,46 mm bei einem Außendurchmesser von z.B. 2,08 mm.

Den Spannbereich (80) stellt ein Spannaußengewinde (81) dar. Es ist hier ein 1,46 mm langes M1,6 × 0,35 -Regelgewinde nach DIN 13, Blatt 1.

Der an den Spannbereich (80) angrenzende Greifbereich (85) hat zum einen eine geometrische Form, über die der Schraubbolzen (60-62) mithilfe eines Handhabungsgeräts ergriffen und in die vierte Zone (57) der Ausnehmung (51) des Suprastrukturträgers (20-22) zum Einschrauben eingeführt werden kann, vgl. Figur 4. Zum anderen erleichtert der Greifbereich (85) das Einführen des Suprastrukturträgers (20-22) mit eingeschraubtem Schraubbolzen (60), vgl. Figur 5, in die Stufenbohrung des Implantatkörpers (10).

Hier ist der Greifbereich (85) beispielsweise ein sich zum freien Ende des Schraubbolzens (60) hin verjüngender Außensechskant. Zwei gegenüberliegende Flanken des Außensechskants dieses Greifmittels schließen z.B. einen Winkel von 5 Winkelgrade ein. Der maximale Durchmesser des Außendurchmessers ist kleiner als der Kerndurchmesser des Spannaußengewindes (81). Nach Figur 3 hat der Außensechskant eine Schlüsselweite von 0,95 mm.

Selbstverständlich kann der Greifbereich (85) auch als kurzer zylindrischer Zapfen oder Konus ausgebildet werden. Wird ein Konus genutzt, verjüngt sich dieser zu seinem freien Ende hin. Vorzugsweise haben der Zapfen oder der Konus einen maximalen Außendurchmesser, der kleiner oder gleich dem Kerndurchmesser des Spannaußengewindes ist. Ggf. kann der Greifbereich (85) weggelassen werden. In diesem Fall wird der Schraubbolzen (60) zum Einsetzen und Einschrauben in den Suprastrukturträger (20) am Spannaußengewinde (81) vom Handhabungsgerät ergriffen.

Der Greifbereich (85) kann in Form einer Bohrung oder Ausnehmung ganz oder bereichsweise in den Spannbereich (80) integriert werden. In diesem Fall greift das Handhabungsgerät mit einem Miniaturspanndorn in die entsprechende Bohrung oder Ausnehmung.

Figur 4 zeigt den Suprastrukturträger (20) beim Einsetzen des Schraubbolzens (60) in die untere Ausnehmung (53). Hier gelangt der Anlenkbereich (63) des Schraubbolzens (60) in den Bereich des Antriebsinnengewindes (72). Wird der Schraubbolzen (60) weiter in die untere Ausnehmung (52) hineingeschoben, gelangt das Antriebsaußengewinde (71) vor das Antriebsinnengewinde (72) des Suprastrukturträgers (20). Ab hier wird der Schraubbolzen (60) in das Antriebsinnengewinde (72) eingeschraubt, bis der Anschlagflansch (78) des Schraubbolzens (60) am Anschlagbund (54) anliegt, vgl. Figur 5. Nun sitzt der Schraubbolzen (60) verliersicher im Suprastrukturträger (20) in seiner hinteren Position. In dieser Form kann die Kombination aus dem Suprastrukturträger (20) und dem Schraubbolzen (60) in den Handel gelangen.

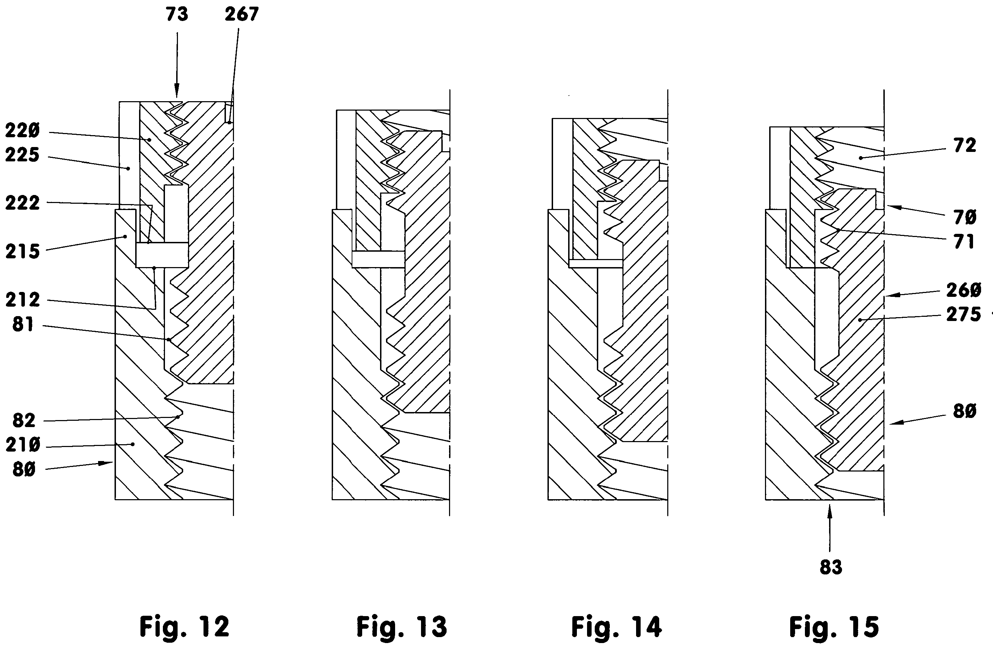

Der Vorgang, mittels dem der Suprastrukturträger (20) in den Implantatkörper (10) eingesetzt und eingeschraubt wird, wird im Folgenden anhand der Figuren 12-15 mit ihren vereinfachten Darstellungen beschrieben. Dargestellt ist ein Doppelschraubgetriebe mit zwei Rechtsgewinden in halbseitiger Schnittdarstellung in vier Positionen. In jeder der Figuren 12-15 sind ein Ersatzschraubbolzen (260), eine Hubmutter (220) als Suprastrukturträgerersatz und eine Festmutter (210) als Implantatkörperersatz gezeigt.

Der Ersatzschraubbolzen (260) hat in erster Näherung alle Merkmale eines Schraubenbolzens nach DIN 2509. Beidseits eines z.B. glatten Schafts (275) befindet sich jeweils ein Gewindeabschnitt. Der vordere Gewindeabschnitt ist hier das Spanngewinde (81), während der hintere Gewindeabschnitt das Antriebsgewinde (71) darstellt. Am Antriebsgewinde (71) hat er eine Werkzeugausnehmung in Form eines Schlitzes (267), um z.B. mit einem Schlitzschraubendreher den Ersatzschraubbolzen (260) verdrehen zu können.

Das Spanngewinde (81) und das Antriebsgewinde (71) haben jeweils im Ausführungsbeispiel vier Gewindegänge. Ein Gewindegang entspricht einem um 360 Winkelgrade umlaufenden Gewindezahn. Das Spanngewinde (81) weist eine Steigung von 7 LE auf, während das Antriebsgewinde (71) nur eine Gewindesteigung von 5 LE hat.

Sowohl die Hubmutter (220) als auch die Festmutter (210) haben jeweils vier Gewindegänge. Die Gewindesteigung der Hubmutter (220) entspricht der Gewindesteigung des Antriebsgewindes (71). Die Gewindesteigung der Festmutter (210) entspricht hier der des Spanngewindes (81).

Die Festmutter (210) weist an ihrer oberen Stirnseite einen Festmutteranschlag (212) auf. Über den Festmutteranschlag (212) ragt ein Verdrehsicherungssteg (215) hinaus.

Die Hubmutter (220) hat an ihrer unteren Stirnseite einen Hubmutteranschlag (222), der dem Festmutteranschlag (212) gegenüberliegt. In ihrer Außenwandung ist eine Verdrehsicherungsnut (225) angeordnet. In Letzterer ragt der Verdrehsicherungssteg (215) der Festmutter (210) hinein. Der Verdrehsicherungssteg (215) entspricht dem Innensechskant (15) des Implantatkörpers (10). Die Verdrehsicherungnut (225) ist vergleichbar mit dem Außensechskant (44) des Suprastrukturträgers (20).

Die Figur 12 zeigt die aus der Hubmutter (220) und dem Ersatzschraubbolzen (260) bestehende Baugruppe unmittelbar nach dem Einstecken in die Festmutter (210). Die Verdrehsicherungsnut (225) der Hubmutter (220) umgreift den Verdrehsicherungssteg (215) der Festmutter (210). Die vorderste Flanke des vorderen Gewindegangs des Spannaußengewindes (81) kommt an der hinteren Flanke des Spanninnengewindes (82) zur Anlage. Der Hubmutteranschlag (222) nimmt gegenüber dem Festmutteranschlag (212) seinen maximalen Abstand von 6 LE nach der Kontaktherstellung ein.

Nun wird der Ersatzschraubbolzen (260) mittels einer 360°-Rechtsdrehung in die Festmutter (210) eingeschraubt, vgl. Figur 13. Der Ersatzschraubbolzen (260) macht hierbei einen Hub von 7 LE. Durch die 360°-Rechtsdrehung des Ersatzschraubbolzens (260) schraubt sich dieser zwangsweise um eine Umdrehung aus der Hubmutter (220) heraus. Der Ersatzschraubbolzen (260) lässt dabei die Hubmutter (220) um 5 LE zurück. Dennoch schiebt sich die Hubmutter (220) - in einem Spannhub - um 2 LE auf die Festmutter (210) zu, wobei sich der Abstand zwischen dem Hubmutteranschlag (222) und dem Festmutteranschlag (212) um 2 LE auf 4 LE verringert. Der Spannhub "H" folgt bei diesem Ausführungsbeispiel der Formel:

$$H = U * (p_S - p_A)$$

Hierbei ist "U" die Anzahl der Umdrehungen des Ersatzschraubbolzens (260), "$p_S$" die Steigung des Spanngewindes (81, 82) und "$p_A$" die Steigung des Antriebsgewindes (71, 72).

Wird der Ersatzschraubbolzen (260) eine Umdrehung tiefer eingeschraubt, so ergibt sich das Schnittbild der Figur 14.

Der Abstand zwischen dem Hubmutteranschlag (222) und dem Festmutteranschlag (212) hat sich auf 2 LE verringert.

Nach einer weiteren Umdrehung des Ersatzschraubbolzens (260) liegt der Hubmutteranschlag (222) am Festmutteranschlag (212) an, vgl. Figur 15. Die Einschraubbewegung des Ersatzschraubbolzens (260) ist beendet.

Die Anzahl der Gewindegänge pro Gewindepaarung (73, 83) ist in der gezeigten Prinzipdarstellung - zur Verdeutlichung der Funktion - nur beispielhaft gewählt. Da bei festgeschraubter Hubmutter (220) beide Gewindepaarungen (73, 83) die gleiche Spannlast halten, variiert die Anzahl der tragenden Gewindegänge pro Gewindepaarung nur geringfügig.

Gemäß Figur 2 ist der Einschraubvorgang beendet, nachdem der Implantatkonus (43) fest im Innenkonus (14) des Implantatkörpers (10) sitzt. Alle vier Gewindegänge des Spannaußengewindes (81) sitzen im Spanninnengewinde (82). Ebenso liegen die sechs Gewindegänge des Antriebsaußengewindes (71) im Antriebsinnengewinde (72).

Die Figur 6 zeigt einen kurzen Schraubbolzen (61) ohne Anschlagflansch. Sein Antriebsgewinde (71) und sein Spanngewinde (81) entsprechen denen des Schraubbolzens (60) aus Figur 3. Zwischen den beiden Gewinden (71, 81) befindet sich als Zwischenbereich (75) ein z.B. 0,45 mm kurzer Kegelstumpfzapfen (77), der sich zum Spanngewinde (81) hin verjüngt. Sein Kegelwinkel beträgt z.B. 60 Winkelgrade.

Der zu diesem Schraubbolzen (61) passende Suprastrukturträger (21), vgl. Figuren 7 und 8, hat eine gegenüber der Ausnehmung des Suprastrukturträgers (21) nach Figur 2 anders gestaltete Ausnehmung (51).

Die erste untere Zone (52) ist z.B. ein rechtsgängiges M 2 $\times$ 0,25-Antriebsinnengewinde (72) nach DIN 13, Blatt 2. Dieses Feingewinde hat hier eine Länge von z.B. 1,33 mm. Sein Kerndurchmesser beträgt z.B. 1,76 mm. An das Antriebsinnengewinde (72) schließt sich als zweite Zone (53) eine zylindrische Hintergriffsbohrung (58), deren Durchmesser bei einer Tiefe von ca. 1,25 mm z.B. 2,02 mm beträgt. Die Bohrung (58) geht in eine Anschlagzone in Form einer Engstelle (55) über, die sich - im Längsschnitt - mit einem 0,5 mm-Radius in Richtung der Hintergriffsbohrung (58) aufweitet. Die Engstelle (55) hat einen Innendurchmesser von z.B. 1,62 mm, so dass der Zylinderzapfen (64) des Schraubbolzens (61) mit geringem Spiel hindurchpasst. Oberhalb der Engstelle (55) weitet sich die Bohrung trichterförmig auf, wobei der Öffnungswinkel mindestens 10 Winkelgrade misst. Die Mittellinien des Antriebsinnengewindes (72), der Hintergriffsbohrung (58) und der Engstelle (55) decken sich mit der Mittellinie (29).

Wie in Figur 7 gezeigt, wird vor dem Befestigen des Suprastrukturträgers (21) am Implantatkörper (10) der Schraubbolzen (61) in den Suprastrukturträger (21) von unten aus so weit hineingeschraubt, dass sein Antriebsaußengewinde (71) das Antriebsinnengewinde (72) wieder verlässt, um in die Hintergriffsbohrung (58) zu gelangen. In der Hintergriffsbohrung (58) sitzt das Antriebsaußengewinde (71) des Schraubbolzens (61) verliersicher und dennoch frei drehbar mit Spiel.

Wird nun der Suprastrukturträger (21) zusammen mit dem Schraubbolzen (61) in den Implantatkörper (10) eingesetzt, kommt der vorderste Gewindegang des Spannaußengewindes (81) am ersten Gewindegang des Spanninnengewindes (82) zur Anlage, vgl. Figur 7.

Die Figur 8 zeigt die Montageschnittstelle nach dem Befestigen des Suprastrukturträgers (21) am Implantatkörper (10). Die beiden Außengewinde (71, 81) sind beim Einschraubvorgang nahezu zeitgleich in ihre korrespondierenden Innengewinde (72, 82) eingespurt worden. Der Zylinderzapfen (64) des Schraubbolzens (61) verschließt die Engstelle (55) mit geringem Spiel, sodass dort beim weiteren Fertigstellen des prothetischen Einzelzahnersatzes weder Zement noch Klebstoff in den Bereich des Antriebsgewindes (71, 72) gelangen kann.

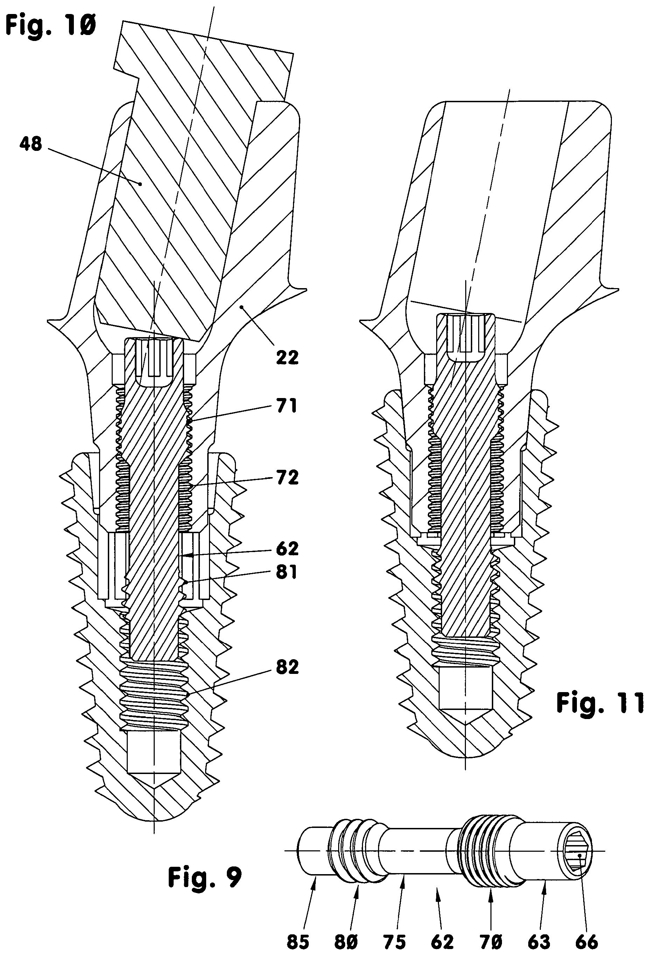

Die Figuren 9-11 zeigen eine Montageschnittstelle mit einem Ersatzschraubbolzen (262), der sowohl ein Rechts- (81) als auch ein Linksgewinde (71) aufweist. Hierzu zeigen die Figu-ren 16-19 eine vereinfachte Darstellung des Doppelschraubgetriebes in halbseitiger Teilschnittdarstellung in vier Positionen. In diesen Figuren weist der Ersatzschraubbolzen (262) vorn ein rechtsgängiges Spanngewinde (81) mit vier Gewindegängen und hinten ein linksgängiges Antriebsgewinde (71) mit sieben Gewindegängen auf. Der mathematische Betrag beider Gewindesteigungen ist z.B. für beide Gewindepaarungen (73, 83) identisch. Der Ersatzschraubbolzen (262) ist in der Seitenansicht dargestellt.

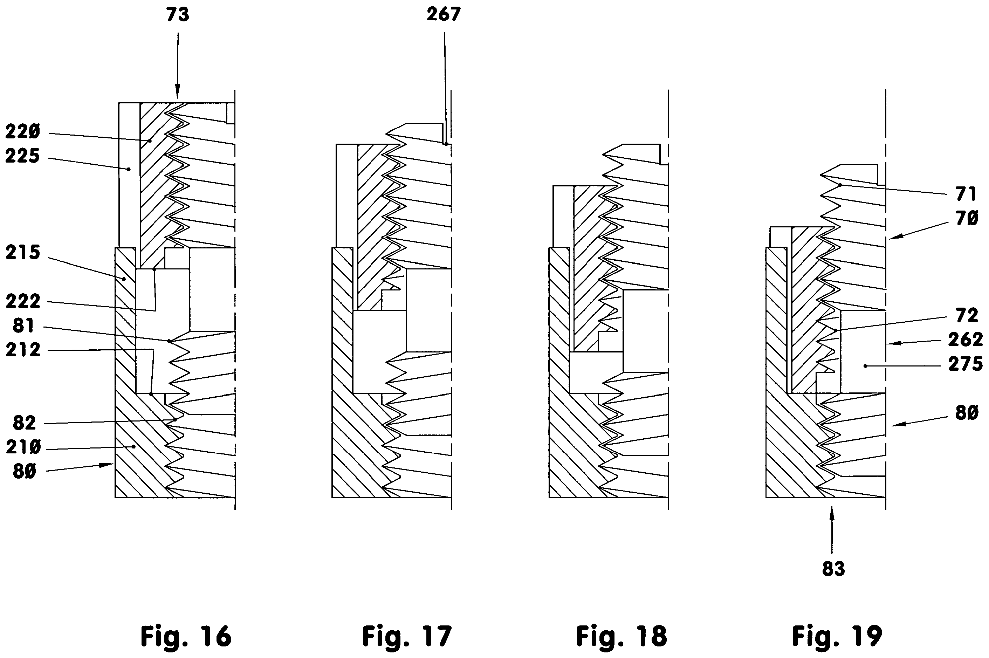

Die Hubmutter (220) ist in den Figuren 16-19 gegenüber der Festmutter (210) ebenfalls verdrehgesichert. Die Verdrehsicherung (215, 225), der Hubmutteranschlag (222) sowie der Festmutteranschlag (212) sind nahezu identisch der in den Figu-ren 12-15 dargestellten Variante entnommen.

Nach der Figur 16 befinden sich alle drei Teile der Kombination aus Hubmutter (220), Ersatzschraubbolzen (262) und Festmutter (210) in ihrem Ausgangszustand nach dem Einstecken des Ersatzschraubbolzens (262) in die Festmutter (210). Auch hier liegt die in die vordere Stirnfläche des Einschraubbolzens (262) übergehende Gewindeflanke an der rückwärtigen Gewindeflanke des hinteren Gewindeganges des Spanninnengewindes (82) an.

Wird nun der Ersatzschraubbolzen (262) in einer Rechtsdrehung um 360 Winkelgrade gedreht, schraubt sich sein erster Gewindegang - um hier z.B. 5 LE - in die Festmutter (210) ein, vgl. Figur 17. Gleichzeitig verschiebt sich die an der Festmutter (210) verdrehgesicherte Hubmutter (220) ebenfalls um einen Gewindegang - also auch um z.B. 5 LE - in Richtung der Hubmutter (220). Folglich bewegt sich der Hubmutteranschlag (222) um 10 LE auf den Festmutteranschlag (212) zu. Der Spannhub H folgt bei diesem Ausführungsbeispiel der Formel:

$$H = U * (p_S + p_A)$$

In den Figuren 18 und 19 wird der Ersatzschraubbolzen (262) jeweils um eine Rechtsdrehung tiefer eingeschraubt. Nach der dritten vollen Umdrehung kontaktiert der Hubmutteranschlag (222) den Festmutteranschlag (212). Dabei sitzt der Ersatzschraubbolzen (262) jeweils mit drei Gewindegängen in der Festmutter (210) und in der Hubmutter (220).

Da hier beispielsweise die Steigungen und die Gewindedurchmesser der Gewindepaarungen (73, 83) jeweils übereinstimmen, hat jede Gewindepaarung (73, 83) die gleiche oder nahezu die gleiche Anzahl an tragenden Gewindegängen.

Im Ausführungsbeispiel nach den Figuren 9-11 wird ein Schraubbolzen (62) verwendet, der als Antriebsaußengewinde (71) ein M 1,8 × 0,2 LH-Gewinde benutzt. Das Spannaußengewinde (81) ist ein M 1,6 × 0,35-Regelgewinde. Der zwischen beiden Gewinden liegende Zwischenbereich (75) ist ein Zylinderzapfen (76), dessen Durchmesser dem Kerndurchmesser des Spannaußengewindes (81) entspricht. Der Durchmesser kann auch auf den Kopfdurchmesser des Antriebsaußengewindes (71) vergrößert werden. Der Greifabschnitt (85) hat nach Figur 9 die Form eines Zylinders.

Die Figur 10 zeigt den Suprastrukturträger (22) zusammen mit dem Schraubbolzen (62) beim Einstecken in den Implantatkörper (10). In dem oberen Teil der Ausnehmung (51) des Suprastrukturträgers (22) steckt kraftschlüssig nur beispielhaft ein aus Kunststoff gefertigter Anschlagbolzen (48), der den Einschraubhub des Schraubbolzens (62) beim Einschrauben in das linksdrehende Antriebsaußengewinde (71) begrenzt. Der Anschlagbolzen (48) wird vor dem Einsetzen des Suprastrukturträgers (22) in den implantierten Implantatkörper (10) entfernt, um für das Werkzeug Platz zu machen.

In der Figur 11 ist die fertiggestellte Montageschnittstelle nach dem rechtsdrehenden Einschrauben des Schraubbolzens (62) in das rechtsdrehende Spanninnengewinde (82) des Implantatkörpers (10) dargestellt.

Alle in den Ausführungsbeispielen gezeigten Gewinde sind metrische Gewinde nach DIN 13. Anstelle der metrischen Gewinde können auch Trapezgewinde, Flachgewinde, Sägengewinde, Rund- bzw. Milchgewinde, Rohrgewinde, Whitworth-Gewinde, UNF/UNC-Gewinde oder dergleichen verwendet werden. Alle Schraubbolzen (60-62) sind beispielsweise aus TiAL6V4 oder TiAl6V4 ELI gefertigt.

Auf den Suprastrukturträger (20), vgl. Figur 2, wird im Ausführungsbeispiel ein Klebekörper (100) aufgeklebt oder aufzementiert. Der Klebekörper (100) ist ein Hohlkörper, der innerhalb der Zahnprothese zwischen dem Suprastrukturträger (20) und der künstlichen Zahnkrone (120) angeordnet ist. Mit seiner Hilfe wird u.a. die Winkellage der Zahnkrone (120) an die Winkellage des Implantatpfostens (23) angeglichen.

Der Klebekörper (100) hat im Wesentlichen eine topfförmige Gestalt. Seine Innenwandung (105) ist an die Außenwandung (26) des Implantatpfostens (23), einschließlich der Randoberseite (37), angepasst. Das Spiel beträgt z.B. 30 bis 50 μm, sodass der Klebekörper (100) unter Zwischenlage eines Klebstoffes (113) auf dem Implantatpfosten (23) des Suprastrukturträgers (20) großflächig aufliegt.

Der Klebekörper (100) hat einen unteren Rand, mit dem er sich an der Randoberseite (37) des Suprastrukturträgers (20) abstützt. Im Bereich seiner Oberseite (102) weist er eine Ausnehmung (106) auf, die bei montierter Prothese eine Verlängerung des oberen Teils der Ausnehmung (51) des Implantatpfostens (23) darstellt.

Nach dem Ausführungsbeispiel gemäß Figur 1 sitzt hier die Zahnkrone (120) auf einem Klebekörper (100). Demnach ist die Innenwandung der Zahnkrone (120) an die Außenwandung (101) des Klebekörpers (100) angepasst. Auch hier liegt das sich zwischen der Außenwandung (101) und Innenwandung der Zahnkrone (120) befindende Spiel bei z.B. 30 bis 50 μm.

Nach Figur 2 sitzt bei der fertigen Prothese der Suprastrukturträger (20) mittels eines Implantatkonus (43) verdrehsicher und verschraubt im Konussitz (14) des Implantatkörpers (10). Der Implantathals (42) und die Unterseite des Implantattellers (31) liegen am Zahnfleisch an.

Bezugszeichenliste:

1 Zahnersatz, prothetisch
5 Vormontagerichtung für (60-62)

10 Implantatkörper
11 Außengewinde
12 Implantatschulter
13 Ausnehmung, gestuft
14 Innenkonus, erste Zone, Konus, Konussitz
15 Innensechskant, zweite Zone, Kupplungsgeometrie
17 Gewindebohrung, dritte Zone für (82)
19 Mittellinie

20 Suprastrukturträger zu Schraubbolzen (60)
21 Suprastrukturträger zu Schraubbolzen (61)
22 Suprastrukturträger zu Schraubbolzen (62)
23 Implantatpfosten
26 Außenfläche, radial; Außenwandung
29 Mittellinie

31 Implantatteller
33 Rand
35 Rinne
37 Randoberseite, flächig

42 Implantathals
43 Implantatkonus, Außenkonus
44 Verdrehsicherung, Außensechskant, Kupplungsgeometrie
48 Anschlagbolzen
49 Mittellinie
51 Ausnehmung, geknickt
52 erste, untere Zone, untere Ausnehmung
53 zweite Zone, untere Ausnehmung
54 Anschlagbund
55 Engstelle, Anschlagzone
56 dritte Zone, Halbkugelmantelfläche
57 vierte, obere Zone; Bohrung, zylindrisch
58 Hintergriffsbohrung
59 Mittellinie von (56, 57)

60 Schraubbolzen mit Anschlagflansch
61 Schraubbolzen, kurz
62 Schraubbolzen mit gegenläufigen Gewinden
63 Anlenkbereich
64 Zapfen, zylinderförmig, Zylinderzapfen
65 Werkzeugausnehmung
66 Innensechskant

70 Antriebsbereich
71 Antriebsaußengewinde, Außengewinde, Antriebsgewinde, Linksgewinde in Figuren 9-11 und 16-19
72 Antriebsinnengewinde, Innengewinde, Antriebsgewinde, Linksgewinde in Figuren 9-11 und 16-19
73 Antriebspaarung, Antriebsgewinde, Paarung

75 Zwischenbereich
76 Zylinderzapfen
77 Kegelstumpfzapfen
78 Anschlagflansch, Anschlagzone
80 Spannbereich
81 Spannaußengewinde, Außengewinde, Spanngewinde
82 Spanninnengewinde, Innengewinde, Spanngewinde
83 Spannpaarung, Spanngewinde, Paarung

85 Greifbereich, Greifmittel

100 Klebekörper, Teil eines Hybridabutments, Suprakonstruktion
101 Außenwandung, Außenfläche
102 Oberseite
105 Innenwandung, Innenfläche
106 Ausnehmung
113 Klebstoff

120 Zahnkrone, künstlich, Suprakonstruktion

210 Festmutter
212 Festmutteranschlag
215 Verdrehsicherungssteg

220 Hubmutter
222 Hubmutteranschlag
225 Verdrehsicherungsnut

260 Ersatzschraubbolzen mit zwei Gewindesteigungen
262 Ersatzschraubbolzen mit Links- u. Rechtsgewinde
267 Schlitz, Werkzeugausnehmung

275 Schaft

LE Längeneinheit

**Patentansprüche**

1. Montageschnittstelle zwischen einem eine Suprakonstruktion (100, 120) tragenden - eine durchgehende, geknickte Ausnehmung (51) aufweisenden - Suprastrukturträger (20-22) und einem ein Innengewinde (82) aufweisenden Implantatkörper (10) unter Zuhilfenahme eines Schraubbolzens (60-62),

- wobei der Suprastrukturträger (20-22) und der Implantatkörper (10) eine zumindest bereichsweise komplementäre Kupplungsgeometrie (15, 44) zur Sicherung der Verdrehsicherheit der Montageschnittstelle aufweisen,
- wobei die Ausnehmung (51) des Suprastrukturträgers (20-22) zur Suprakonstruktion (100, 120) und zum Implantatkörper (10) hin offen ist,
- wobei in der Ausnehmung (51) in ihrem dem Implantatkörper (10) zugewandten Bereich ein Antriebsinnengewinde (72) angeordnet ist,
- wobei der Schraubbolzen (60-62) zwei mit oder ohne Abstand hintereinander angeordnete Außengewinde (71, 81) aufweist, von denen das erste ein Antriebsaußengewinde (71) und das zweite ein Spannaußengewinde (81) ist,
- wobei beide Außengewinde (71, 81) unterschiedliche Steigungen aufweisen,
- wobei das Antriebsaußengewinde (71) in das Antriebsinnengewinde (72) der Ausnehmung (51) des Suprastrukturträgers (20-22) und das Spannaußengewinde (81) in das Spanninnengewinde (82) des Implantatkörpers (10) passen,
- wobei der Schraubbolzen (60 - 62) zwischen dem Spannaußengewinde (81) und dem Antriebsaußengewinde (71) einen Zwischenbereich (75) aufweist, wobei entweder
- der Zwischenbereich (75) sich entweder aus einem Zylinderzapfen (76) und einem an einen planen Anschlagbund (54) anlegbaren Anschlagflansch (78) zusammensetzt, wobei der Anschlagbund (54) einen Übergang zwischen dem Antriebsinnengewinde (72) und einer zylindrischen Bohrung (52) der Ausnehmung (51) bildet oder
- wobei der Zwischenbereich (75) anschlagbundfrei ausgebildet ist und wobei sich an das Antriebsinnengewinde (72) eine zylindrische Hintergriffsbohrung (58) anschließt, die in eine Anschlagzone in Form einer sich in Richtung der Hintergriffsbohrung (58) aufweitende Engstelle (55) übergeht, sodass der Schraubbolzen (61) vor dem Befestigen des Suprastrukturträgers (21) am Implantatkörper (10) so weit vom Antriebsinnengewinde (72) aus in den Suprastrukturträger (21) hineinschraubbar ist, dass sein Antriebsaußengewinde (71) das Antriebsinnengewinde (72) wieder verlässt, um in die Hintergriffsbohrung (58) zu gelangen und wobei ein gewindeloser Zylinderzapfen (64) des Schraubbolzens (61) mit geringem Spiel durch die Engstelle (55) hindurchpasst.

2. Montageschnittstelle gemäß Anspruch 1, **dadurch gekennzeichnet, dass** die beiden Antriebsgewinde (71, 72) eine Antriebspaarung (73) und die beiden Spanngewinde (81, 82) eine Spannpaarung (83) bilden, wobei die Gewinde der beiden Paarungen (73, 83) unterschiedliche Steigungen bei gleichem Steigungsvorzeichen haben.

3. Montageschnittstelle gemäß den Ansprüchen 1 und 2, **dadurch gekennzeichnet, dass** die Gewinde (71, 72) der Antriebspaarung (73) - bei gleichem Steigungsvorzeichen der Gewinde (71, 72, 81, 82) - eine kleinere Steigung als die Gewinde (81, 82) der Spannpaarung (83) haben.

4. Montageschnittstelle gemäß den Ansprüchen 1 und 2, **dadurch gekennzeichnet, dass** die Gewinde (71, 72, 81, 82) beider Paarungen (73, 83) unterschiedliche Steigungsvorzeichen haben.

5. Montageschnittstelle gemäß den Ansprüchen 1, 2 und 4, **dadurch gekennzeichnet, dass** die Gewinde (71, 72) der Antriebspaarung (73) jeweils ein negatives Steigungsvorzeichen haben, also linkssteigende Gewinde (71, 72) sind.

6. Montageschnittstelle gemäß den Ansprüchen 1 bis 5, **dadurch gekennzeichnet, dass** die Gewinde der Paarungen (73, 83) unterschiedliche Gewindedurchmesser aufweisen.

7. Montageschnittstelle gemäß Anspruch 1, **dadurch gekennzeichnet, dass** der Schraubbolzen (60-62) zwischen oder - in spannender Einschraubrichtung - hinter den Außengewinden (71, 81) eine Anschlagzone (78) aufweist.

8. Montageschnittstelle gemäß Anspruch 1, **dadurch gekennzeichnet, dass** der Schraubbolzen (60-62) an mindestens einem Ende eine Werkzeugausnehmung (65) aufweist.

9. Montageschnittstelle gemäß Anspruch 1, **dadurch gekennzeichnet, dass** der Schraubbolzen (60-62) an seinem vorderen Ende ein Greifmittel (85) - in Form eines sich zum freien Ende des Schraubbolzens (60) hin verjüngender Außensechskants, eines zylindrischen Zapfens oder eines sich zu seinem freien Ende hin verjüngenden Konus - aufweist.

## Claims

1. Mounting interface between a superstructure support (20-22) carrying a superstructure (100, 120) - having a continuous, bent recess (51) - and an implant body (10) having an internal thread (82) with the aid of a screw bolt (60-62),

- wherein the superstructure support (20-22) and the implant body (10) have an at least partially complementary coupling geometry (15, 44) to ensure the torsion resistance of the assembly interface,

- wherein the recess (51) of the superstructure support (20-22) is open towards the superstructure (100, 120) and the implant body (10),
- wherein an internal drive-thread (72) is arranged in the recess (51) in its region facing the implant body (10),
- wherein the screw bolt (60-62) has two external threads (71, 81) arranged one behind the other with or without spacing, of which the first is an external drive-thread (71) and the second is an external clamping-thread (81),
- wherein both external threads (71, 81) have different pitches,
- wherein the external drive-thread (71) fits into the internal drive-thread (72) of the recess (51) of the superstructure support (20-22) and the external clamping-thread (81) fits into the internal clamping-thread (82) of the implant body (10),
- wherein the screw bolt (60-62) has an intermediate region (75) between the external clamping-thread (81) and the external drive-thread (71), wherein either
- the intermediate region (75) is composed of a cylindrical journal (76) and a stop flange (78) which can be placed against a flat stop collar (54), wherein the stop collar (54) forms a transition between the internal drive thread (72) and a cylindrical bore (52) of the recess (51), or
- wherein the intermediate region (75) is formed without a stop collar and wherein the internal drive-thread (72) is adjoined by a cylindrical rear grip bore (58) which merges into a stop zone in the form of a constriction (55) which widens in the direction of the rear grip bore (58), so that the screw bolt (61) can be screwed into the superstructure support (21) from the internal drive-thread (72) before the superstructure support (21) is fastened to the implant body (10) to such an extent that its external drive thread (71) leaves the internal drive thread (72) again in order to enter the rear-grip bore (58),and wherein a thread-less cylindrical pin (64) of the screw bolt (61) fits through the constriction (55) with little play.

2. Mounting interface according to claim 1, **characterised in that** the two drive threads (71, 72) form a drive pairing (73) and the two clamping threads (81, 82) form a clamping pairing (83), the threads of the two pairings (73, 83) having different pitches with the same pitch sign.

3. Mounting interface according to claims 1 and 2, **characterised in that** the threads (71, 72) of the drive pairing (73) - with the same pitch sign of the threads (71, 72, 81, 82) - have a smaller pitch than the threads (81, 82) of the clamping pairing (83).

4. Mounting interface according to claims 1 and 2, **characterised in that** the threads (71, 72, 81, 82) of both pairings (73, 83) have different pitch signs.

5. Mounting interface according to claims 1, 2 and 4, **characterised in that** the threads (71, 72) of the drive pairing (73) each have a negative pitch sign, i.e. are left-hand ascending threads (71, 72).

6. Mounting interface according to claims 1 to 5, **characterised in that** the threads of the pairings (73, 83) have different thread diameters.

7. Mounting interface according to claim 1, **characterised in that** the screw bolt (60-62) has a stop zone (78) between or - in the clamping screw-in direction - behind the external threads (71, 81).

8. Mounting interface according to claim 1, **characterised in that** the screw bolt (60-62) has a tool recess (65) at at least one end.

9. Mounting interface according to claim 1, **characterised in that** the screw bolt (60-62) has a gripping means (85) at its front end - in the form of an external hexagon tapering towards the free end of the screw bolt (60), a cylindrical pin or a cone tapering towards its free end.

## Revendications

1. Interface de montage entre un support de superstructure (20-22) portant une superstructure (100, 120) - présentant un évidement (51) continu et coudé - et un corps d'implant (10) présentant un filetage intérieur (82), à l'aide d'un boulon fileté (60-62),

- le support de superstructure (20-22) et le corps d'implant (10) présentant une géométrie d'accouplement (15, 44) complémentaire au moins par zones pour assurer la sécurité contre la rotation de l'interface de montage,
- l'évidement (51) du support de superstructure (20-22) étant ouvert vers la superstructure (100, 120) et vers le corps d'implant (10),
- un filetage intérieur d'entraînement (72) étant disposé dans l'évidement (51) dans sa zone tournée vers le corps d'implant (10),
- le boulon fileté (60-62) présentant deux filets extérieurs (71, 81) disposés l'un derrière l'autre avec ou sans distance, dont le premier est un filet extérieur d'entraînement (71) et le deuxième un filet extérieur de serrage (81),
- les deux filets extérieurs (71, 81) présentant des pas différents,

- le filetage extérieur d'entraînement (71) s'adaptant dans le filetage intérieur d'entraînement (72) de l'évidement (51) du support de superstructure (20-22) et le filetage extérieur de serrage (81) s'adaptant dans le filetage intérieur de serrage (82) du corps d'implant (10),
- dans lequel le boulon fileté (60 - 62) présente une zone intermédiaire (75) entre le filetage extérieur de serrage (81) et le filetage extérieur d'entraînement (71), dans lequel soit
- la zone intermédiaire (75) se compose d'un tourillon cylindrique (76) et d'une bride de butée (78) pouvant être appliquée sur un collet de butée plan (54), le collet de butée (54) formant une transition entre le filetage intérieur d'entraînement (72) et un alésage cylindrique (52) de l'évidement (51), ou bien
- la zone intermédiaire (75) étant réalisée sans collerette de butée et un alésage cylindrique de prise arrière (58) se raccordant au filetage intérieur d'entraînement (72), lequel se transforme en une zone de butée sous la forme d'une zone d'étranglement (55) s'élargissant en direction de l'alésage de prise arrière (58), de sorte que le boulon fileté (61) peut être vissé dans le support de superstructure (21) avant la fixation du support de superstructure (21) sur le corps d'implant (10) à partir du filetage intérieur d'entraînement (72) jusqu'à ce que son filetage extérieur d'entraînement (71) quitte à nouveau le filetage intérieur d'entraînement (72) pour arriver dans le trou de prise arrière (58),et dans lequel un tourillon cylindrique non fileté (64) du boulon fileté (61) s'adapte avec un faible jeu à travers la zone d'étranglement (55).

2. Interface de montage selon la revendication 1, **caractérisée en ce que** les deux filets d'entraînement (71, 72) forment une paire d'entraînement (73) et les deux filets de serrage (81, 82) une paire de serrage (83), les filets des deux paires (73, 83) ayant des pas différents pour un même signe de pas.

3. Interface de montage selon les revendications 1 et 2, **caractérisée en ce que** les filets (71, 72) de l'appariement d'entraînement (73) - avec le même signe de pas des filets (71, 72, 81, 82) - ont un pas plus petit que les filets (81, 82) de l'appariement de serrage (83).

4. Interface de montage selon les revendications 1 et 2, **caractérisée en ce que** les filets (71, 72, 81, 82) des deux paires (73, 83) ont des signes de pas différents.

5. Interface de montage selon les revendications 1, 2 et 4, **caractérisée en ce que** les filets (71, 72) de l'appariement d'entraînement (73) ont chacun un signe de pas négatif, c'est-à-dire qu'il s'agit de filets (71, 72) montant vers la gauche.

6. Interface de montage selon les revendications 1 à 5, **caractérisée en ce que** les filetages des paires (73, 83) présentent des diamètres de filetage différents.

7. Interface de montage selon la revendication 1, **caractérisée en ce que** le boulon fileté (60-62) présente une zone de butée (78) entre les filets extérieurs (71, 81) ou - dans le sens de vissage sous tension - derrière ceux-ci.

8. Interface de montage selon la revendication 1, **caractérisée en ce que** le boulon fileté (60-62) présente un évidement d'outil (65) à au moins une extrémité.

9. Interface de montage selon la revendication 1, **caractérisée en ce que** le boulon fileté (60-62) présente à son extrémité avant un moyen de préhension (85) - sous la forme d'un hexagone extérieur se rétrécissant en direction de l'extrémité libre du boulon fileté (60), d'un tenon cylindrique ou d'un cône se rétrécissant en direction de son extrémité libre.

1
12Ø
1Ø6
1Ø2
1ØØ
1Ø1
2Ø
37
33
26
35
31
43
44
5
6Ø
14
13
12
15
1Ø

Fig. 1

100
59
105
113
26
23
20
49
42
12
60
57
51
56
53
14
54
52
15
13
82
17
10
11
19

Fig. 2

59
20
72
29
52
71
76
60
78
82
Fig. 4
20
60
Fig. 5
Fig. 3
66
63
70
75
80
85
60

21
71
72
81
82
21
65
55
66
58
59
63
64
7Ø
61
75
77
8Ø
85

Fig. 8

Fig. 7

Fig. 6

Fig. 1Ø
48
22
71
72
62
81
82
Fig. 11
Fig. 9
85
8Ø
75
62
7Ø
63
66

72
70
71
260
275
80
83
Fig. 15
Fig. 14
Fig. 13
267
73
Fig. 12
220
225
222
215
212
81
82
210
80

73
267
220
225
215
222
81
212
82
210
80
71
70
72
262
275
80
83


Fig. 16

Fig. 17

Fig. 18

Fig. 19

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9852488 A1
- DE 202012102746 U1